# EUROPÄISCHE PATENTANMELDUNG

(11) **EP 2 450 549 A2**
(43) Veröffentlichungstag der Anmeldung: **09.05.2012**
(21) Anmeldenummer: 11008718.6
(22) Anmeldetag: 02.11.2011
(51) Int. Cl.: F02C 6/16

(54) **Druckstufen-Wärme-Speicherkraftwerk bzw. Energiespeicherverfahren zum zeitweiligen Speichern von Energie in Form von Druckenergie in einem kompressiblen Medium in Form von Wärmeenergie**

(30) Priorität: 04.11.2010 DE 102010050428
(71) Anmelder: Tietjen, Theo, 38678 Clausthal-Zellerfeld (DE)
(72) Erfinder: Tietjen, Theo, 38678 Clausthal-Zellerfeld (DE)
(74) Vertreter: Höfer, Friederike

(57) **Zusammenfassung**

Druckstufen-Wärme-Speicherkraftwerk bzw. Energiespeicherverfahren zum zeitweiligen Speichern von Energie in Form von Druckenergie in einem kompressiblen Medium und in Form von Wärmeenergie

Die Erfindung bezieht sich auf ein Druckstufen-Wärme-Speicherkraftwerk bzw. ein entsprechendes Energiespeicherverfahren zum zeitweiligen Speichern von Energie in Form von Druckenergie in einem kompressiblen Medium (20) in einem Druckspeicher (11) und in Form von Wärmeenergie mit zumindest einer Einspeicher-Druckstufe, bestehend aus in Reihe geschaltet zumindest einer Kompressionsvorrichtung (2 - 5) und zumindest einer wärmeaustauschvorrichtung (6 - 9), und zumindest einer Ausspeicher-Druckstufe, bestehend aus in Reihe geschaltet zumindest einer Wärmeaustauschvorrichtung (6 - 9) und zumindest einer Expansionsvorrichtung (13 - 16), wobei eine Anzahl der Einspeicher-Druckstufen ungleich ist zu einer Anzahl der Ausspeicher-Druckstufen.

## Beschreibung

Druckstufen-Wärme-Speicherkraftwerk bzw. Energiespeicherverfahren zum zeitweiligen Speichern von Energie in Form von Druckenergie in einem kompressiblen Medium und in Form von Wärmeenergie

Die Erfindung bezieht sich auf ein Druckstufen-Wärme-Speicherkraftwerk mit den oberbegrifflichen Merkmalen gemäß Anspruch 1 bzw. auf ein Energiespeicherverfahren mit den oberbegrifflichen Merkmalen gemäß Anspruch 9.

Ein derartiges Druckstufen-Wärme-Speicherkraftwerk ist in bekannter Art und Weise ausgestattet mit mindestens einer Kompressionsvorrichtung, mit mindestens einer Expansionsvorrichtung, mit mindestens einer wärmeaustauschvorrichtung und mit mindestens einem Druckspeicher. Eine Kompressionsvorrichtung ist dabei eine Anordnung von mindestens einer Kompressionsmaschine mit mindestens einer Kompressionsstufe, wobei die Kompressionsstufe allgemein auch als Verdichterstufe bezeichnet wird. Kompressionsmaschinen, allgemein auch als Kompressoren bezeichnet, sind Verdichter aller Art, wie z.B. sogenannte Turboverdichter, Rotationskolbenverdichter und Verdrängerverdichter. Eine Expansionsvorrichtung ist dabei eine Anordnung von mindestens einer Expansionsmaschine, wie z.B. Turbine, Rotationskolbenmaschine oder Verdrängermaschine, mit mindestens einer Expansionsstufe. Wärmeaustauschvorrichtungen sind alle rekuperativen und regenerativen Wärmetauscher, auch solche mit zusätzlicher Wärmespeicherfunktion.

DE 26 36 417 A1 beschreibt eine Druckluftspeicheranlage mit mehreren Wärmeaustauschvorrichtungen zur wärmeabfuhr in ein Wärmespeichermedium und Wärmezufuhr aus einem Wärmespeichermedium. Die Wärmeaustauschvorrichtungen sind ausgestaltet als Zwischenkühler b2w. Zwischenerhitzer. Zum Einspeichern der Energie sind die Wärmeaustauschvorrichtungen hinter jeweils eine Kompressionsvorrichtung geschaltet. In Form einer Niederdruckstufe und einer Hochdruckstufe ist diese Kombination zweifach und in Reihe geschaltet vorhanden. Kompressionswärme wird als Wärmeenergie beim Einspeichervorgang über die Wärmeaustauschvorrichtungen in ein flüssiges Wärmespeichermedium übertragen, wobei das Wärmespeichermedium in einem extra dafür vorgesehenen Wärmespeicherbehälter gelagert wird. Die komprimierte Luft als kompressibles Medium, wobei die komprimierte Luft Druckenergie beinhaltet, wird in einem separaten Druckspeicher bevorratet. Zum Ausspeichern der Energie sind die Wärmeaustauschvorrichtungen vor jeweils eine Expansionsvorrichtung geschaltet. In einer Hochdruckstufe und einer Niederdruckstufe ist diese Kombination zweifach und in Reihe geschaltet vorhanden. Die zu speichernde elektrische Energie wird der Speicheranlage über einen Elektromotor zugeführt, wobei der Elektromotor die Kompressionsvorrichtungen antreibt. Wieder abgegeben wird diese Energie über einen elektrischen Generator, wobei der Generator mit den Expansionsvorrichtungen verbunden ist. Die Anzahl der Zwischenkühler und Zwischenerhitzer sowie der Stufen der Kompressions- und der Expansionsvorrichtungen sind hierbei gleich groß, um eine besonders günstige Abstimmung von Energiespeicher- und Energieausnutzungsbetrieb erzielen zu können. Zusätzlich ist es beim Einspeichervorgang möglich, überschüssige Wärmeenergie über zusätzliche Zwischenkühler aus der Anlage abzuführen.

Nachteilhaft ist dabei die indirekte Wärmeübertragung über einen rekuperativen Wärmetauscher in das flüssige Medium. Der Wärmeübergang erfolgt durch die Wandung des drucktrennend auszulegenden Wärmetauschermaterials hindurch in das flüssige wärmespeichermedium. Der thermische Wirkungsgrad des Wärmeübergangs ist dadurch gering. Sollen Druckverluste beim Durchgang durch die Wärmeaustauschvorrichtung klein gehalten werden, liegt nachteilhaft eine tatsächlich im Wärmespeicher erreichbare Temperatur deutlich unterhalb einer Temperatur des komprimierten Gases. In nachteilhafter Weise benötigt diese Art der Wärmespeicherung den Einbau und Betrieb von Pumpen für das Wärmespeichermedium.

Nachteilhaft ist dabei auch die zwangsläufige Führung des wärmespeichermediums durch Rohrleitungen vom Wärmespeicher zu den Wärmetauschern, wodurch sich die Gesamtoberfläche des Wärmespeichers erhöht und somit Wärme- und Temperaturverluste auftreten.

Die Anordnung weist eine gleiche Anzahl der Zwischenkühler und Zwischenerhitzer sowie der Stufen der Kompressions- und der Expansionsvorrichtung auf. Durch Verluste bei den Wärmeübergängen in das Speichermedium und zurück kann die komprimierte Luft vor der Expansionsvorrichtung bzw. vor den Expansionsvorrichtungen nicht wieder auf die gleiche Temperatur wie hinter der Kompressionsvorrichtung bzw. hinter den Kompressionsvorrichtungen erhitzt werden, sondern nur auf eine niedrigere Temperatur. Das führt zu einer Unterkühlung der Luft während der Expansionsphase in der Expansionsvorrichtung bzw. in den Expansionsvorrichtungen und Wasser kondensiert aus bzw. die entsprechende Expansionsvorrichtung vereist. Um Auskondensieren von Wasser oder Vereisen der entsprechenden Expansionsvorrichtung zu vermeiden, müsste die Luft vor Erreichen des Umgebungsdrucks, zum Beispiel vor der letzten Turbinenstufe, in eine Umgebung ausgelassen gelassen werden. Dabei würde nachteilhaft ein Teil der zuvor eingespeicherten Energie verloren gehen.

DT 25 41 501 A1 beschreibt einen adiabaten Druckluftspeicher. Beim Einspeichern strömt komprimierte und erhitzte Luft zunächst durch eine Wärmeaustauschvorrichtung. Die Wärmeaustauschvorrichtung, wobei die Wärmeaustauschvorrichtung gleichzeitig ein Wärmetauscher und Wärmespeicher ist, weist in Durchströmungsrichtung mehrere hintereinander angeordnete Kammern auf, wobei die Kammern mit Kugeln gefüllt sind und diese Kugeln aus einer Feststoffhülle bestehen und gefüllt sind mit Speichermedien, wobei die Speichermedien in den jeweiligen Kammern in Richtung Speichertank abnehmende Kristallisationstemperaturen aufweisen. Die höchste Speichertemperatur wird dabei in der einer Kompressionsmaschine bzw. einer Expansionsmaschine benachbarten Kammer vorgesehen. Die Energie der abgekühlten, komprimierten Luft, die etwa ein Drittel der Gesamtenergie des adiabaten Druckluftspeichers bei z.B. 30 bar Speicherdruck beinhaltet, wird in einem dem Wärmespeicher nachgeschalteten Druckspeicher gespeichert. Beim Ausspeichern durchströmt die kalte, komprimierte Luft den Wärmespeicher in umgekehrter Richtung und heizt sich dabei wieder auf.

Nachteilhaft ist auch bei dieser Anordnung der indirekte Wärmeübergang.

Bei hohen Speicherdrücken entstehen zudem hohe Kompressionstemperaturen - bei 30 bar ca. 500 °C. Diese hohen Temperaturen erfordern eine aufwändige Isolierung sowie temperatur- und druckbeständige Materialien der mit diesen Temperaturen in Kontakt gelangenden und der mit entsprechend hohen Drücken belasteten Komponenten, z.B. Rohre und Speicherbehälter, und führen außerdem bei längeren Speicherzeiten zu Wärmeverlusten. Da die gespeicherte Kompressionswärme den Großteil der gespeicherten Gesamtenergie ausmacht, sind diese Wärmeverluste besonders nachteilhaft.

Die Anordnung weist ebenfalls eine gleiche Anzahl von Stufen beim Einspeichern und Ausspeichern auf, wobei die Anzahl der Stufen in diesem Fall eins ist. Durch den indirekten Wärmeübergang erreicht die komprimierte Luft beim Ausspeichern nach dem Wärmeaustauschvorgang nicht wieder die gleiche Temperatur wie beim Einspeichern vor dem Wärmeaustauschvorgang, sondern eine niedrigere Temperatur. Das führt zu einer Unterkühlung der Luft während der Expansionsphase in der Expansionsvorrichtung. Wasser kondensiert aus bzw. die Expansionsvorrichtung vereist. Um Auskondensieren von Wasser oder Vereisen der Expansionsvorrichtung zu vermeiden, wird die Luft vor Erreichen des Umgebungsdrucks, zum Beispiel vor der letzten Turbinenstufe, in die Umgebung ausgelassen. Dabei geht ein Teil der zuvor eingespeicherten Energie verloren.

DD 11 84 55 A1 beschreibt einen Druckspeicher für die Druckluft mit Wärmespeicherung in Ölsäure als Wärmespeichermedium. Beim Einspeichern strömt die komprimierte, heiße Luft nach jeder Kompressionsvorrichtung durch eine Wärmeaustauschvorrichtung, wobei in der Wärmeaustauschvorrichtung die Wärmeenergie der Luft in das Wärmespeichermedium übertragen wird. Das erhitzte Wärmespeichermedium, welches die Wärmeenergie speichert, wird in einem separaten Druckspeicher bevorratet. Für jede Kompressionsvorrichtung wird jeweils ein eigenes Ölsäure-Wärmeaustauschsystem mit eigenem Vorratstank verwendet. Nach der letzten Kompressionsvorrichtung strömt die komprimierte und heiße Luft in einen separaten Druckspeicher, wobei nach der letzten Kompressionsvorrichtung keine Wärmeaustauschvorrichtung und auch kein Ölsäure-Wärmeaustauschsystem vorgesehen ist und wobei die komprimierte und heiße Luft die Druckenergie und einen Teil der Wärmeenergie beinhaltet. Der Druckspeicher kann auch eine Kaverne sein. Eine Wärmeisolierung des Druckspeichers ist nicht vorgesehen. Beim Ausspeichern strömt die komprimierte und kalte Luft zunächst durch eine Wärmeaustauschvorrichtung, wobei in der Wärmeaustauschvorrichtung die Wärmeenergie des Wärmespeichermediums in die komprimierte und kalte Luft übertragen wird. Danach strömt die komprimierte, erhitzte Luft durch eine Expansionsvorrichtung. Dieser Vorgang wiederholt sich für die Anzahl der vorhandenen Ölsäure-Wärmeaustauschsysteme. Die letzte Expansionsvorrichtung ist so ausgelegt, dass die Luft diese Expansionsvorrichtung mit einer Temperatur von 20 bis 30 °C verlässt. Diese kalte Luft strömt als Kühlluft durch eine Wärmeaustauschvorrichtung, wobei in der Wärmeaustauschvorrichtung die kalte Luft die zurückströmende Ölsäure aus den Wärmeaustauschvorrichtungen vor den Expansionsvorrichtungen nachkühlt. Zusätzlich sind elektrische Heizungen für die Speichertanks des Wärmespeichermediums vorgesehen. Die Kompressionsmaschinen werden beim Einspeichern von einem elektrischen Motor angetrieben. Die Expansionsmaschinen treiben beim Ausspeichern einen elektrischen Generator an.

Nachteilhaft ist auch bei dieser Anordnung die indirekte Wärmeübertragung über einen rekuperativen Wärmetauscher in das flüssige Medium. In nachteilhafter Weise erfordert diese Art der Wärmespeicherung den Einbau und Betrieb von Pumpen für das Wärmespeichermedium.

Nachteilhaft ist auch, dass nach der letzten Expansionsvorrichtung keine Wärmeaustauschvorrichtung vorhanden ist, welche die Wärmeenergie der Luft aufnehmen und zwischenspeichern könnte. Eine Wärmeisolierung der Druckspeicher ist nicht vorgesehen. Deshalb kühlt sich die eingespeicherte komprimierte Luft im Druckspeicher ab und die Wärmeenergie geht verloren.

Nachteilhaft ist auch, dass das Expansionsverhältnis der letzten Expansionsmaschine so ausgelegt ist, dass die Abluft eine Temperatur von 20 bis 30°C aufweist. Durch die Temperaturverluste der indirekten Wärmeübertragung in das Wärmespeichermedium und zurück sowie die fehlende Wärmemenge und das fehlende Temperaturniveau aus der letzten Kompressionsstufe ist eine zusätzliche Aufheizung über die elektrischen Zusatzheizungen in den Speichertanks des Wärmespeichermediums notwendig. Die zugeheizte Wärmeenergie muss sowohl die nicht abgespeicherte Wärmeenergie der letzten Kompressionsstufe sowie die Wärmeübertragungsverluste kompensieren, damit die Luft bei der Temperaturvorgabe von 20 bis 30 °C nicht mit einem erheblichen Restdruck in die Umgebung abgegeben werden muss. Hierbei würde sonst ein Teil der eingespeicherten Energie verloren gehen.

Besonders nachteilhaft ist die Abhängigkeit von den elektrischen Zusatzheizungen. Allgemein bekannt ist, dass ein großer Anteil der derzeitigen elektrischen Energie aus fossilen Energieträgern bei einem Wirkungsgrad zwischen 25 und 45 Prozent gewonnen wird. Die elektrische Zuheizung erzeugt deshalb, wenn auch nicht am Ort des Druckluftspeicherkraftwerks, erhebliche Umweltbelastungen.

Es ist allgemein bekannt, dass für eine Speicherung der Druckluft in Kavernen, je nach den lokalen geologischen Gegebenheiten, enge Vorgaben vom Bergamt bezüglich zulässiger Temperatur- und Druckschwankungen erfolgen. Beim Einspeichern ohne Wärmeaustauschvorrichtung nach der letzten Kompressionsvorrichtung gelangt die komprimierte und heiße Luft in die Kaverne und kühlt dort ab. Deutliche Temperaturschwankungen in der Kaverne sind die Folge. Nachteilhaft hierbei ist, dass dieses Verfahren deshalb nicht für beliebige Kavernen zulässig und einsetzbar ist. Beim Einspeichern in die Kaverne erhöht sich außerdem der Druck in der Kaverne mit dem Beladungszustand. Nachteilhaft ist hierbei, dass die einzuspeichernde Druckluftmenge durch die Vorgaben maximal erlaubter Druckgradienten durch das Bergamt stark eingeschränkt wird.

DE 25 36 447 B2 beschreibt eine Druckluftspeicheranlage mit einem Druckluftspeicher als Kaverne. Die Umgebungsluft wird beim Einspeichern von einer mehrstufigen Kompressionsvorrichtung komprimiert, wobei die mehrstufige Kompressionsvorrichtung in einem ersten Fall eine Niederdruckstufe und eine Hochdruckstufe bzw. in einem zweiten Fall eine Niederdruckstufe, eine Mitteldruckstufe und einen Hochdruckstufe besitzt. Die Niederdruckstufe ist in beiden Fällen mit verstellbaren Leitschaufeln für variable Leistungsaufnahme ausgestattet. Für den ersten Fall wird die komprimierte heiße Luft nach jeder Stufe in einer Wärmeaustauschvorrichtung gekühlt. Für den zweiten Fall wird die komprimierte heiße Luft nach der Niederdruckstufe und der Mitteldruckstufe in jeweils einer Wärmeaustauschvorrichtung gekühlt. Nach der Hochdruckstufe erfolgt keine Kühlung. Die komprimierte Luft wird in einem unterirdischen Gleichdruckspeicher bevorratet, wobei der Gleichdruckspeicher unter Nutzung einer geodätischen Höhe und einer Rohrleitung zu einem See an der Erdoberfläche nach dem Prinzip der Wasserverdrängung durch die komprimierte Luft funktioniert. Eine Wärmeisolierung des Druckspeichers ist nicht vorgesehen. Beim Ausspeichern wird die komprimierte Luft aus dem Druckspeicher in einer Brennkammer erhitzt und dann durch eine Gasturbine als Expansionsvorrichtung geführt. Die Kompressionsvorrichtung wird beim Einspeichern von einem Elektromotor angetrieben, wobei der Elektromotor beim Ausspeichern als Generator die Leistung der Expansionsvorrichtung aufnimmt.

Nachteilhaft ist hierbei, dass die Kompressionswärme als ein Großteil der eingespeicherten Energie verloren geht. Dieser Verlust wird durch entsprechende Brennstoffzufuhr in der Gasturbine kompensiert.

Auch hier gelten die Einschränkungen durch die Vorgaben des Bergamts. Beim Einspeichern nach dem zweiten Fall ohne Wärmeaustauschvorrichtung nach der Hochdruckstufe gelangt die komprimierte und heiße Luft in die Kaverne und kühlt dort ab. Deutliche Temperaturschwankungen in der Kaverne sind die Folge. Nachteilhaft hierbei ist, dass dieses Verfahren deshalb nicht für beliebige Kavernen zulässig und einsetzbar ist.

Weitere derartige Energiespeicheranlagen sind allgemein bekannt. DE 26 15 439 A1 beschreibt eine Druckluftspeicheranlage mit Wärmezufuhr mittels Dampf und elektrischer Zuheizung. DE 34 28 041 A1, EP 364106 B1, US 4,630,436, US 4,523,432 und US 4,765,142 beschreiben Druckluftspeicheranlagen mit Zufeuezung.

Nachteilhaft bei all diesen Anlagen ist, dass die entstehende Kompressionswärme beim Einspeichern nur zum Teil oder gar nicht genutzt wird, um die komprimierte Luft beim Ausspeichern wieder aufzuheizen. Diese Wärmeenergie geht verloren. Nachteilhaft ist bei all diesen Anlagen, dass eine Abhängigkeit von Brennstoff oder Heizstrom besteht.

DE 19 41 062, DE 26 02 530 B1 und US 3,773,031 beschreiben als allgemeine Hintergrundtechnologie Latenzwärmespeicher mit einer Zirkulation einer Flüssigkeit zum Wärmeaustausch und einer Nutzung eines Phasenübergangs zur Wärme- bzw. Kältespeicherung. US 4,205,656 und US 4,520,862 zeigen als allgemeine Hintergrundtechnologie Latenzwärmespeicher mit einer Substanz mit hoher Wärmekapazität, welche Wärmeenergie aufnimmt und speichert. AT 251164 B beschreibt einen Regenerator zum Halten einer konstanten Temperatur.

Allgemein bekannt sind auch Windkraftanlagen, Photovoltaikanlagen, Solarthermiekraftwerke, Biogaskraftwerke und Industrieanlagen, die Energie in Form elektrischem Strom oder in Form von Wärmeenergie bzw. Abwärme bei zum Teil hohen Temperaturen zu Zeiten ausreichender Windgeschwindigkeiten, ausreichenden Sonnenscheins b2w. zu Zeiten der Betriebsarbeitszyklen bereitstellen. Aufgrund unzureichenden Strombedarfs bzw. lokal fehlender Infrastruktur wird diese elektrische Energie b2w. diese Wärmeenergie häufig unzureichend oder gar nicht genutzt und geht verloren.

Die Aufgabe der Erfindung besteht darin, ein Druckstufen-Wärme-Speicherkraftwerk bzw. ein Energiespeicherverfahren mit einem effizienteren Speicherkonzept für vorhandene, insbesondere auch für überschüssige elektrische oder für überschüssige mechanische Energie bereitzustellen.

Insbesondere soll bei angestrebten langen Haltezeiten des Energiespeichers und bei weniger Energieverlusten die Wärmeenergie länger gespeichert werden können.

Insbesondere soll die zu einem Zeitpunkt der Stromnachfrage tatsächlich im Wärmespeicher zur Verfügung stehende Wärmemenge unter Berücksichtigung der vorhandenen Temperaturen sowie die tatsächlich zur Verfügung stehende Druckenergie im Druckspeicher unter Berücksichtigung des Druckes und Füllgrades möglichst vollständig für die Energieerzeugung beim Ausspeichervorgang verwertet werden.

Vorzugsweise sollen außerdem lokal zur Verfügung stehenden externen Wärmemengen unter Berücksichtigung der vorhandenen Temperaturen, des Drucks der gespeicherten Druckluft und der gespeicherten Wärmeenergie effektiv in das Konzept des Speicherkraftwerks eingebunden werden.

Diese Aufgabe wird durch ein Druckstufen-Wärme-Speicherkraftwerk mit den Merkmalen des Patentanspruchs 1 bzw. durch ein Energiespeicherverfahren mit den Merkmalen des Patentanspruchs 9 gelöst. Vorteilhafte Ausgestaltungen sind Gegenstand von abhängigen Ansprüchen.

Bevorzugt wird demgemäß ein Druckstufen-Wärme-Speicherkraftwerk zum zeitweiligen Speichern von Energie in Form von Druckenergie in einem kompressiblen Medium in einem Druckspeicher und in Form von Wärmeenergie mit zumindest einer Einspeicher-Druckstufe, bestehend aus in Reihe geschaltet zumindest einer Kompressionsvorrichtung und zumindest einer Wärmeaustauschvorrichtung, und zumindest einer Ausspeicher-Druckstufe, bestehend aus in Reihe geschaltet zumindest einer Wärmeaustauschvorrichtung und zumindest einer Expansionsvorrichtung, dadurch kennzeichnet, dass eine Anzahl der Einspeicher-Druckstufen ungleich ist einer Anzahl der Ausspeicher-Druckstufen.

Ist zum Zeitpunkt des Ausspeicherns die Temperatur in dem zumindest einen Wärmespeicher durch z.B. Verluste geringer als die Temperatur der beim Einspeichern erreichten Kompressionswärme, dann kann für eine effiziente Ausnutzung der Wärmeenergie die Anzahl der Ausspeicher-Druckstufen vorteilhaft höher gewählt werden als die Anzahl der Einspeicher-Druckstufen. Ist zum Zeitpunkt des Ausspeicherns die Temperatur in den Wärmespeichern durch z.B. Zuführung von Wärmeenergie aus externen Quellen größer als die Temperatur der beim Einspeichern erreichten Kompressionswärme, dann kann für eine effiziente Ausnutzung der Wärmeenergie die Anzahl der Ausspeicher-Druckstufen vorteilhaft niedriger gewählt werden als die Anzahl der Einspeicher-Druckstufen. Vorteilhaft ermöglicht wird durch eine solche ungleiche Druckstufenzahl die effizientere Nutzung einer durch z.B. Wärmeverluste verminderten oder einer durch z.B. extern zugeführte Wärmemengen erhöhten, tatsächlich in den Wärmespeichern befindliche Wärmemenge.

Eine hohe Anzahl von Einspeicher-Druckstufen ist vor allem dann vorteilhaft, wenn lange Speicherzeiten geplant sind. Die auftretenden Kompressionstemperaturen sind dann niedriger und die Wärmeenergie ist mit weniger Isolationsaufwand für die Wärme speichernden und die Wärme leitenden Komponenten des Kraftwerks speicherbar. Die Kompressionsvorrichtungen bestehen aus mindestens einem Kompressor, auch Kompressionsmaschine genannt, wie z.B. Turboverdichter, Rotationskolbenverdichter und Verdrängerverdichter. Der Kompressor kann optional mehrere Kompressionsstufen aufweisen. Die Expansionsvorrichtungen bestehen aus mindestens einer Expansionsmaschine, wie z.B. Turbinen, Rotationskolbenmaschinen und Verdrängermaschinen, wobei die Expansionsmaschine mehrere Expansionsstufen aufweisen kann. Die Wärmeaustauschvorrichtungen umfassen alle rekuperativen und regenerativen Wärmetauscher, auch solche mit zusätzlicher Wärmespeicherfunktion.

Das komprimierte Medium wird nach den Einspeicherdruckstufen in mindestens einem separaten Druckspeicher gelagert, wobei der Druckspeicher z.B. ein Vorratsbehälter, ein stillgelegtes Bergwerk, eine Anordnung aus Rohrleitungen oder eine Kaverne sein kann.

Bevorzugt wird außerdem ein solches Speicherkraftwerk mit mindestens einer solchen Wärmeaustauschvorrichtung, welche in mehrere als solche Wärmeaustauschvorrichtungen ausgebildete Teilbereiche unterteilt ist, wobei diese Teilbereiche vom kompressiblen Medium unabhängig voneinander durchströmbar sind, wobei Temperaturgradienten innerhalb zueinander benachbart angeordneter Teilbereiche zueinander gleichgerichtet parallel verlaufen.

Vorteilhaft für eine verschiedene Anzahl der Einspeicher- bzw. Ausspeicher-Druckstufen beim Einspeichern und Ausspeichern sind entsprechend ausgestaltete Wärmeaustauschvorrichtungen. Wenn die Anzahl erhöht wird, sind dadurch vorteilhaft Teilbereiche der Wärmeaustauschvorrichtungen unabhängig von anderen Teilbereichen der Wärmeaustauschvorrichtungen vom kompressiblen Medium durchströmbar. Wenn die Anzahl der Einspeicher- bzw. Ausspeicher-Druckstufen verringert wird, sind vorteilhaft mehrere Teilbereiche der Wärmeaustauschvorrichtungen parallel vom kompressiblen Medium durchströmbar sein.

Vorteilhaft sind mindestens so viele Teilbereiche der Wärmeaustauschvorrichtungen vorhanden wie die maximal im Speicherkraftwerk verwendete Anzahl der Einspeicher- bzw. Ausspeicher-Druckstufen. Für einen thermodynamisch günstigen Prozess ist es so möglich, in jeder Einspeicher-Druckstufe nach der Kompressionsvorrichtung Kompressionswärme abzuführen und zu speichern bzw. in jeder Ausspeicher-Druckstufe vor der Expansionsvorrichtung Speicherwärme zuzuführen.

Vorteilhaft sind benachbarte Teilbereiche der Wärmeaustauschvorrichtungen so nebeneinander angelegt, dass die Temperaturgradienten innerhalb zueinander benachbart angeordneter Teilbereiche zueinander gleichgerichtet parallel verlaufen. Auf diese Weise werden die Temperaturdifferenzen der benachbarten Bereiche klein gehalten und es entstehen keine Wärmeenergieverluste durch Wärmeenergieaustausch.

Bevorzugt wird außerdem ein solches Speicherkraftwerk mit einer Beschaltungsvorrichtung mit Verbindungsleitungen zwischen einer oder mehreren solcher Kompressionsvorrichtungen und einer oder mehreren solcher Wärmeaustauschvorrichtungen und zu dem zumindest einen das kompressible Medium speichernden Druckspeicher, wobei verschieden einstellbare Schaltzustände der Beschaltungsvorrichtung die Anzahl der von dem kompressiblen Medium durchströmbaren Einspeicher-Druckstufen beschalten.

Bevorzugt wird außerdem ein solches Speicherkraftwerk mit einer Beschaltungsvorrichtung mit Verbindungsleitungen zwischen einer oder mehreren solcher Expansionsvorrichtungen und jeweils einer oder mehreren solcher wärmeaustauschvorrichtungen und zu dem zumindest einen das kompressible Medium speichernden Druckspeicher, wobei verschieden einstellbare Schaltzustände der Beschaltungsvorrichtung die Anzahl der von dem kompressiblen Medium durchströmbaren Ausspeicher-Druckstufen beschalten.

Ebenso wie die Wärmeaustauschvorrichtungen sind bevorzugt die Kompressionsvorrichtungen und die Expansionsvorrichtungen für unterschiedliche Anzahlen der Einspeicher- bzw. Ausspeicher-Druckstufen unterschiedlich vom kompressiblen Medium durchströmbar.

Bei einer Einspeicher-Druckstufenanzahl bzw. Ausspeicher-Druckstufenanzahl größer 1 kann das kompressible Medium für jede Druckstufe durch eine oder mehrere Teilstufen der Kompressionsvorrichtung bzw. Expansionsvorrichtung und dahinter bzw. davor durch mindestens einen Teilbereich einer Wärmeaustauschvorrichtung oder mindestens eine separate Wärmeaustauschvorrichtung strömen. Bei nur einer Einspeicher-Druckstufe bzw. Ausspeicher-Druckstufe kann das kompressible Medium durch die gesamte Kompressionsvorrichtung bzw. Expansionsvorrichtung und dahinter bzw. davor durch mindestens einen Teilbereich einer Wärmeaustauschvorrichtung oder mindestens eine separate Wärmeaustauschvorrichtung strömen. Durch eine solche Schaltung ist es auch möglich, nur Teilstufen bzw. einzelne der Kompressionsvorrichtungen und Expansionsvorrichtungen zu schalten und so das Speicherkraftwerk bei unterschiedlichen Drücken und unterschiedlichen Einspeicherleistungen zu betreiben.

Vorteilhaft ist es außerdem, die Schaltung so auszuführen, dass die Anzahl der Einspeicher- bzw. Ausspeicher-Druckstufen im Betrieb variiert werden kann, wenn z.B. beim Ausspeichern die Temperatur in den Wärmespeichern so weit gefallen ist, dass die Anzahl der Einspeicher- bzw. Ausspeicher-Druckstufen erhöht werden sollte.

Bevorzugt wird außerdem ein solches Speicherkraftwerk, bei dem zumindest eine solche Wärmeaustauschvorrichtung als Wärmespeicher ausgelegt ist und aus einem vom kompressiblen Medium durchströmbaren Festkörper oder aus einem vom kompressiblen Medium durchströmbaren Hohlraum mit Festkörperfüllung besteht.

Für einen direkten Wärmeübergang mit geringen Temperaturverlusten wird bevorzugt ein regenerativer Wärmespeicher eingesetzt. Bevorzugt können die Wärmeaustauschvorrichtungen in unterschiedliche Bereiche oder separate Wärmeaustauschvorrichtungen aufgeteilt werden, wobei diese Bereiche oder separate Wärmeaustauschvorrichtungen unterschiedliche Temperaturen aufweisen und mit unterschiedlich ausgeführter Isolierung ausgerüstet sind.

Ist diese Wärmeaustauschvorrichtung mit Wärmespeicherfunktion aus mehreren separat vom kompressiblen Medium durchströmbaren, benachbarten Teilbereichen aufgebaut, dann ist es vorteilhaft, Bereiche gleicher Temperatur, z.B. vorgegeben durch die Durchströmungsrichtung in den Teilbereichen, benachbart anzuordnen. Dadurch kommt es nicht zu ungewollten wärmeflüssen und Temperaturverlusten innerhalb des Wärmespeichers.

Der verwendete Feststoff ist vorteilhaft mit mindestens einer der Eigenschaften Hitzebeständigkeit, hoher Wärmekapazität und guter Wärmeleitfähigkeit ausgestattet.

Bevorzugt wird außerdem ein solches Speicherkraftwerk, bei dem mindestens eine Externwärmezuleitung an mindestens eine der Wärmeaustauschvorrichtungen anschließbar ist.

Es ist vorteilhaft so lokal verfügbare externe Wärmeenergie in das Speicherkraftwerk einzubringen. Dadurch kann die Temperatur in den wärmespeichern erhöht werden und unter Umständen die Ausspeicher-Druckstufenanzahl verringert werden und damit die abgegebene Energie des Speicherkraftwerks erhöht werden.

Steht die externe Wärmeenergie in Form heißer Gase zur Verfügung, z.B. Abgase aus Biogasanlagen oder Prozessgase aus Industrieanlagen, können vorteilhaft als regenerative Wärmespeicher ausgeführte Wärmeaustauschvorrichtungen wechselweise von den heißen Gasen der externen Wärmequelle und dem kompressiblen Medium des Speicherkraftwerks durchströmt werden. So ist der Wärmeübergang direkt und mit wenigen Temperaturverlusten verbunden.

Steht die externe Wärmeenergie in Form von heißen Flüssigkeiten zur Verfügung, z.B. warmes Kühlwasser von Kraftwerken, heiße Öle oder andere heiße Flüssigkeiten aus Solarthermieanlagen oder warmes Kühlwasser aus Industrieanlagen, ist es vorteilhaft die Wärmeaustauschvorrichtungen als rekuperative Wärmetauscher auszulegen. Es kann dann auch vorteilhaft sein, mehrere Wärmeaustauschverrichtungen rekuperativ zu gestalten und die Wärmeenergie in einem flüssigen Wärmespeichermedium mit separat ausgestalteten Vorratstanks zu speichern.

Vorteilhaft können auch in dem Speicherkraftwerk verwendete regenerative Wärmespeicher über Heizspiralen durch die externe Wärme beheizt werden. Mit einem solchen Speicherkraftwerk kann vorteilhaft die Einspeicher-Druckstufenanzahl und die Ausspeicher-Druckstufenanzahl an die zur Verfügung stehende externe Wärmeenergie so angepasst werden, dass die Temperatur und Wärmemenge der externen Wärmeenergie möglichst vollständig genutzt wird.

Bevorzugt wird außerdem ein solches Speicherkraftwerk, bei dem mindestens eine der Kompressionsvorrichtungen auch als zumindest eine der Expansionsvorrichtungen schaltbar ist. Durch Einsatz von Kompressionsvorrichtungen, welche auch geeignet sind als Expansionsvorrichtungen zu arbeiten, lassen sich vorteilhaft Komponenten einsparen. Vorteilhaft können hier unter anderem Rotationskolbenmaschinen eingesetzt werden.

Bevorzugt wird außerdem, wenn zumindest ein Motor an die zumindest eine Kompressionsvorrichtung gekoppelt oder koppelbar ist und der Motor als Generator an zumindest eine der Expansionsvorrichtungen gekoppelt oder koppelbar ist.

Durch das Verwenden elektrischer Maschinen als Motoren, wobei diese elektrischen Maschinen auch als Generatoren eingesetzt werden können, lassen sich Komponenten einsparen. Vorteilhaft können diese elektrischen Maschinen beim Einspeichern bzw. Ausspeichern mittels Kupplungen mit den Kompressionsmaschinen bzw. den Expansionsmaschinen verbunden werden. Vorteilhaft kann die Anzahl der Kupplungen verringert werden, wenn die Kompressionsvorrichtungen auch als Expansionsvorrichtungen verwendet werden.

Vorteilhaft verwendet werden kann zur Bevorratung der komprimierten Luft ein für sich genommen bekannter Gleichdruckspeicher. Es gibt verschiedene Ausführungen, z.B. als unterirdische Kaverne mit kommunizierender Rohrleitung zu einem oberirdisch gelegenen See oder als Ballon unter Wasser.

Vorteilhaft verwendet werden kann ein Speichermedium mit Phasenübergang. Für sich genommen bekannt sind diesbezüglich verschiedene Ausführungen, z.B. als in Hüllkörpern eingeschlossene Stoffe mit fest-flüssig Übergang oder als Wärmespeichermedium mit gas-flüssig Übergang.

Vorteilhaft verwendet werden kann bei diesem Speicherkraftwerk auch Strom zum Heizen. Es ist allgemein bekannt, dass eine elektrische Widerstandsheizung einen hohen Wirkungsgrad besitzt. Durch die anpassbaren Anzahlen der Einspeicher- bzw. Ausspeicher-Druckstufen dieses Speicherkraftwerks ist es möglich, die gewonnene Wärmeenergie aus der Widerstandsheizung effektiver in nutzbare Energie umzuwandeln. Da vorzugsweise der verlustbehaftete Prozess des Einspeicherns mittels Einspeicher-Druckstufen hier weggelassen wird und nur der ebenfalls mit Verlusten behaftete Prozess des Ausspeicherns über Ausspeicher-Druckstufen mit weiter aufgeheizten Wärmeaustauschvorrichtungen erfolgt, ergibt sich ein Wirkungsgradvorteil. Vorteilhaft kann zu Zeiten von Stromüberschuss der Strom, insbesondere regenerativ erzeugter Strom zum Beheizen der Wärmespeicher verwendet werden.

Vorteilhaft verwendet werden kann eine Ausführung dieses Speicherkraftwerks, bei dem die Abwärme aus Biogaskraftwerken, z.B. aus Wasserkühlung und Abgas, als externe Wärmeenergie in das Speicherkraftwerk eingebracht wird. Wird zudem ausschließlich regenerativ gewonnene elektrische Energie, z.B. aus Windkraftanlagen oder Photovoltaikanlagen, in das Speicherkraftwerk eingespeichert, dann ist die zu Bedarfszeiten verfügbare, wieder ausgespeicherte und bereitgestellte elektrische Energie vollständig regenerativ. Vorteilhaft ausführbar sind auf diese Weise autarke Inselversorgungsnetze aus rein regenerativen Energieträgern.

Vorteilhaft verwendet werden kann eine Ausführung dieses Speicherkraftwerks, wobei mindestens eine Kompressionsvorrichtung bzw. mindestens eine Expansionsvorrichtung Energie in Form von mechanischer Energie aufnimmt bzw. abgibt. Steht mechanische Energie zur Verfügung bzw. wird mechanische Energie benötigt, kann so der Umweg über eine Umwandlung in elektrische Energie und zurück ausgespart werden. Die Verluste werden so reduziert.

Eigenständig vorteilhaft ist entsprechend ein Energiespeicherverfahren zum zeitweiligen Speichern von Energie in Form von Druckenergie in einem kompressiblen Medium und in Form von Wärmeenergie, bei dem das kompressible Medium beim Einspeichern zumindest eine Einspeicher-Druckstufe, bestehend aus in Reihe geschaltet zumindest einer Kompressionsvorrichtung und zumindest einer Wärmeaustauschvorrichtung, und beim Ausspeichern zumindest eine Ausspeicher-Druckstufe, bestehend aus in Reihe geschaltet zumindest einer Wärmeaustauschvorrichtung und zumindest einer Expansionsvorrichtung, durchströmt, wobei eine Anzahl von den Einspeicher-Druckstufen ungleich einer Anzahl von den Ausspeicher-Druckstufen durchströmt wird.

Vorteilhaft ist dabei mindestens eine solche Wärmeaustauschvorrichtung in mehrere als solche Wärmeaustauschvorrichtungen ausgebildete Teilbereiche unterteilt, wobei diese Teilbereiche vom kompressiblen Medium unabhängig voneinander durchströmt werden, wobei Temperaturgradienten innerhalb zueinander benachbart angeordneter Teilbereiche zueinander gleichgerichtet parallel verlaufen.

Bevorzugt wird die Anzahl der von dem kompressiblen Medium durchströmbaren Einspeicher-Druckstufen wahlweise beschaltet durch wahlweises Beschalten von Verbindungsleitungen zwischen einer oder mehreren solcher Kompressionsvorrichtungen und einer oder mehreren solcher Wärmeaustauschvorrichtungen.

Bevorzugt wird dabei oder alternativ dazu die Anzahl der von dem kompressiblen Medium durchströmbaren Ausspeicher-Druckstufen wahlweise beschaltet durch wahlweises Beschalten von Verbindungsleitungen zwischen einer oder mehreren solcher Expansionsvorrichtungen und einer oder mehreren solcher Wärmeaustauschvorrichtungen.

Das kompressible Medium kann vorteilhaft durch zumindest eine solche Wärmeaustauschvorrichtung geleitet werden, welche als Wärmespeicher ausgelegt ist und aus einem vom kompressiblen Medium durchströmbaren Festkörper oder aus einem vom kompressiblen Medium durchströmbaren Hohlraum mit Festkörperfüllung besteht.

Durch mindestens eine Externwärmezuleitung kann optional zusätzlich externe Wärmeenergie in mindestens eine der wärmeaustauschvorrichtungen zugeführt werden.

Bevorzug wird, wenn zumindest eine der Kompressionsvorrichtungen zum Ausspeichern alternativ bzw. wahlweise als Expansionsvorrichtung beschaltet wird.

Insbesondere kann zumindest ein Motor wahlweise die zumindest eine Kompressionsvorrichtung antreiben oder der Motor kann als Generator von zumindest einer der Expansionsvorrichtungen angetrieben werden.

Verschiedene Ausgestaltungen eines Ausführungsbeispiels werden nachfolgend anhand der Zeichnungen näher erläutert. Dabei bezeichnen in den verschiedenen der Figuren gleiche Bezugszeichen jeweils gleiche oder gleich wirkende Komponenten oder Funktionen, weshalb diesbezüglich auch auf die Ausführungen der übrigen Figuren Bezug genommen werden kann. Es zeigen:
- Fig. 1: schematisch Komponenten eines Druckstufen-WärmeSpeicherkraftwerks gemäß einer ersten beispielhaften Ausgestaltung;
- Fig. 2: schematisch Komponenten eines Druckstufen-WärmeSpeicherkraftwerks gemäß einer zweiten beispielhaften Ausgestaltung;
- Fig. 3A: eine Einspeicher-Kurve im p-V-Diagramm unter Verwendung einer einzigen Einspeicher-Druckstufe;
- Fig. 3B: eine Ausspeicher-Kurve im p-V-Diagramm mit einer Ausspeicher-Druckstufe nach für sich genommen bekannten Temperaturverlusten;
- Fig. 3C: eine Ausspeicher-Kurve einer bevorzugten Ausgestaltung im p-V-Diagramm mit einer Ausspeicher-Druckstufe nach Temperaturverlusten; und
- Fig. 4: schematisch Komponenten eines Druckstufen-WärmeSpeicherkraftwerks gemäß einer bevorzugten dritten Ausgestaltung.

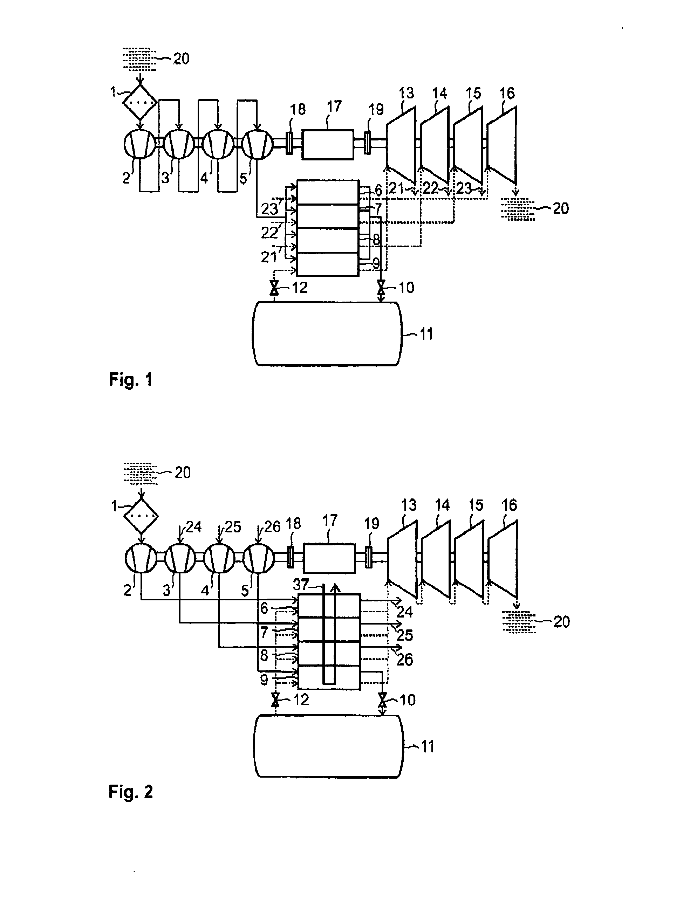

Fig. 1 stellt beispielhaft ein solches Druckstufen-Wärme-Speicherkraftwerk dar, das eine vierstufige Kompressionsanordnung mit vier Kompressionsvorrichtungen 2 - 5, eine vierstufige Expansionsanordnung mit vier Expansionsvorrichtungen 13 - 16, vier Wärmeaustauschvorrichtungen und einen Druckspeicher 11 aufweist, welche durch eine Vielzahl von Verbindungsrohren untereinander verbunden sind.

Das Speicherkraftwerk ist mit einer lediglich beispielhaft fest dargestellten Beschaltung dargestellt, wobei die Beschaltung einen Einspeichervorgang mit einer Einspeicher-Druckstufe und einen Ausspeichervorgang mit vier Ausspeicher-Druckstufen ermöglicht. Diese Beschaltung ist sinnvoll, wenn der Wärmespeicher nach oder während der Einspeicherphase durch Verluste, z.B. nach langen Speicherzeiten, deutlich an Temperatur verloren hat. Dargestellt sind mit durchgezogenen Linien Verbindungsrohre, welche zum Einspeichern verwendet werden, und mit gepunkteten Linien Verbindungsrohre 21 - 23, welche zum Ausspeichern verwendet werden.

Umgebungsluft als kompressibles Medium 20 gelangt bei dem Einspeichervorgang mit einer einzigen Einspeicher-Druckstufe durch einen Filter 1 hindurch zu einer Kompressionsanordnung. In der Kompressionsanordnung wird das kompressible Medium 20 ohne Zwischenkühlung in vier Stufen der Kompressionsanordnung bzw. in vier in Reihe geschalteten Kompressionsvorrichtungen 2, 3, 4 und 5 komprimiert. Das komprimierte heiße kompressible Medium 20 durchströmt danach parallel vier Wärmeaustauschvorrichtungen 6, 7, 8 und 9, wobei die wärmeaustauschvorrichtungen 6 - 9 beispielhaft als regenerativer Wärmespeicher ausgeführt sind und wobei das kompressible Medium 20 Wärmeenergie an die Wärmeaustauschvorrichtungen 6 - 9 abgibt. Das komprimierte abgekühlte kompressible Medium 20 gelangt danach durch ein offenes Ventil 10 in einen Druckspeicher 11. Diese Komponenten, die vier in Reihe geschalteten Kompressionsvorrichtungen 2 - 5 einerseits und andererseits die dahinter geschalteten parallel Wärmeaustauschvorrichtungen 6 - 9, stellen eine einzige Einspeicher-Druckstufe dar.

Beim beispielhaft vierstufigen Ausspeichern gelangt das komprimierte kompressible Medium 20 aus dem Druckspeicher 11 durch ein dazu geöffnetes Ventil 12 in die vierte der Wärmeaustauschvorrichtungen 9, wird dort erhitzt und von dort über eines der Verbindungsrohre zum Expandieren in eine erste der Expansionsvorrichtungen 13 geleitet. Diese Komponenten, die vierte wärmeaustauschvorrichtung 9 und die erste Expansionsvorrichtung 13, stellen eine einzige Ausspeicher-Druckstufe dar. Verbindungsrohre 21, 22 und 23 leiten die Luft jeweils nach einer solchen Ausspeicher-Druckstufe in eine folgende solche Ausspeicher-Druckstufe. Die folgenden drei Ausspeicher-Druckstufen sind ausgebildet aus der dritten Wärmeaustauschvorrichtung 8 mit einer dazu in Reihe verbundenen zweiten Expansionsvorrichtung 14, aus der zweiten Wärmeaustauschvorrichtung 7 mit einer dazu in Reihe verbundenen dritten Expansionsvorrichtung 15 und aus der ersten Wärmeaustauschvorrichtung 8 mit einer dazu in Reihe verbundenen vierten Expansionsvorrichtung 16. Nach der letzten, vierten Expansionsvorrichtung 16 wird das kompressible Medium 20 zurück in die Umgebung ausgelassen. Diese Komponenten stellen vier in Reihe geschaltete Ausspeicher-Druckstufen dar.

Ein kombinierter Motor und Generator 17 wird zum Einspeichern über Wellen und eine erste Kupplung 18 mit den Kompressionsvorrichtungen 2 - 5 verbunden. Für die Funktion als Generator wird zum Ausspeichern eine Verbindung zu den Expansionsvorrichtungen über Wellen und mittels einer zweiten Kupplung 19 hergestellt. Alternativ können z.B. auch jeder der Kompressionsvorrichtungen ein eigener Motor und jeder der Expansionsvorrichtungen ein eigener Generator zugeordnet sein.

Fig. 2 stellt beispielhaft ein derartiges Druckstufen-Wärme-Speicherkraftwerk dar, das aufweist eine vierstufige Kompressionsvorrichtung oder vier Kompressionsvorrichtungen 2 - 5, eine vierstufige Expansionsvorrichtung oder vier Expansionsvorrichtungen 13 - 16, vier Wärmeaustauschvorrichtungen 6 - 9, optional eine Externwärmezuleitung 37 und einen Druckspeicher 11.

Das Speicherkraftwerk ist mit einer Beschaltung dargestellt, wobei die Beschaltung einen Einspeichervorgang mit vier Einspeicher-Druckstufen und einen Ausspeichervorgang mit einer Ausspeicher-Druckstufe ermöglicht. Diese Schaltung ist sinnvoll, wenn die Wärmespeichervorrichtung 6 - 9 als wärmespeicher ausgeführt ist und nach oder während der Einspeicherphase durch zugeführte externe Wärmeenergie 37 insbesondere deutlich an Temperatur gewonnen hat.

Beim Einspeichern mit vier Einspeicher-Druckstufen gelangt das kompressible Medium 20 in Form von Umgebungsluft durch einen Filter 1 in die erste Kompressionsvorrichtung 2, wird dort komprimiert und nachfolgend über ein Verbindungsrohr in die erste Wärmeaustauschvorrichtung 6 geleitet und gibt darin Wärmeenergie ab. Die Wärmeaustauschvorrichtungen sind bevorzugt als regenerativer Wärmespeicher ausgeführt. Diese Komponenten, d.h. die erste Kompressionsvorrichtung 2 und die erste Wärmeaustauschvorrichtung 6, stellen eine einzige Einspeicher-Druckstufe dar. Weitere verbindungsrohre 24, 25 und 26 leiten das bereits teilweise komprimierte kompressible Medium 20 jeweils nach einer Einspeicher-Druckstufe in eine jeweils folgende Einspeicher-Druckstufe. Die folgenden Einspeicher-Druckstufen sind ausgebildet aus der zweiten Kompressionsvorrichtung 3 mit der dieser nachgeschalteten zweiten Wärmeaustauschvorrichtung 7, aus der dritten Kompressionsvorrichtung 4 mit der dieser nachgeschalteten Wärmeaustauschvorrichtung 8 bzw. aus der vierten Kompressionsvorrichtung 5 mit der dieser nachgeschalteten vierten Wärmeaustauschvorrichtung 9. Nach der letzten Wärmeaustauschvorrichtung 9 gelangt das komprimierte abgekühlte kompressible Medium 20 durch ein offenes erstes Ventil 10 in den Druckspeicher 11. Bei dieser Ausgestaltung sind beispielhaft vier Einspeicher-Druckstufen ausgebildet.

Das komprimierte kompressible Medium 20 durchströmt beim Ausspeichervorgang mit einer einzigen Ausspeicher-Druckstufe austretend aus dem Druckspeicher 11 ein offenes zweites Ventil 12 und dann parallel zueinander die vier Wärmeaustauschvorrichtungen 6, 7, 8 und 9 und wird darin erhitzt. Das komprimierte heiße kompressible Medium 20 durchströmt danach alle vier zueinander in Reihe geschalteten oder verbundenen Expansionsmaschinen 13, 14, 15 und 16 nacheinander ohne Zwischenerhitzung und expandiert. Das abgekühlte und dekomprimierte kompressible Medium 20 gelangt danach in die Umgebung 20.

Auch bei dieser Ausgestaltung ist ein kombinierter Motor und Generator 17 an die mit den Kompressionsvorrichtungen und mit den Expansionsvorrichtungen 13 - 16 koppelbar.

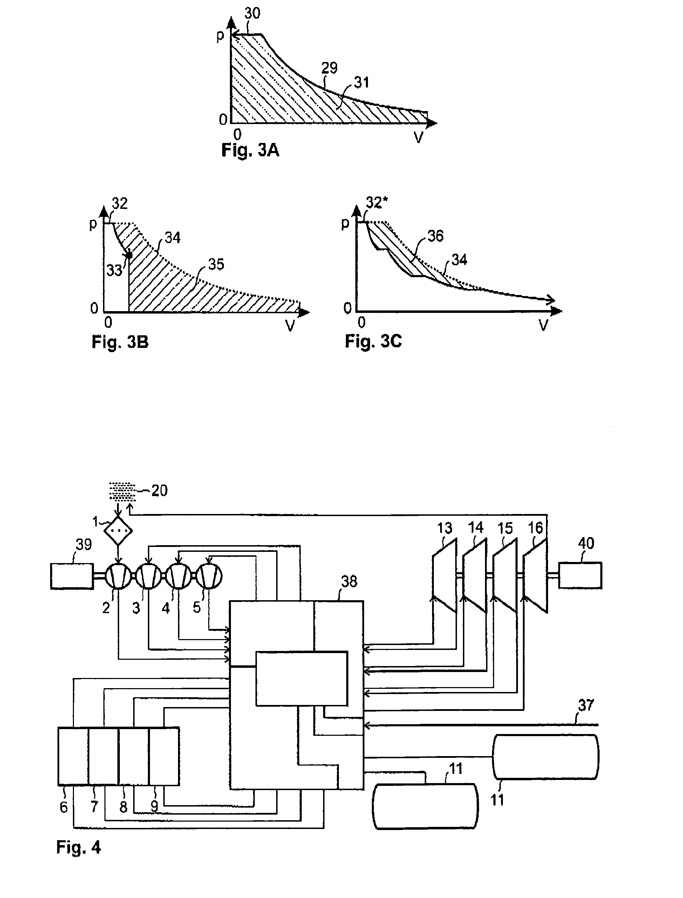

Fig. 3A - Fig. 3C zeigen Diagramme, in denen ein Druck p über einem Volumen v dargestellt ist. Fig. 3A stellt einen Einspeichervorgang mit einer einzigen Einspeicher-Druckstufe wie bei der Ausgestaltung gemäß Fig. 1 dar. Ein von rechts nach links exponentiell ansteigender Verlauf beschreibt eine verlustlose adiabate Kompression 29 in den Kompressionsvorrichtungen 2 - 4. Ein anschließender waagerechter Verlauf beschreibt eine verlustlose isobare Abkühlung 30 in den Wärmeaustauschvorrichtungen 6 - 9. Eine schraffiert dargestellte Fläche 31 unter der Einspeicherkurve entspricht der beim Einspeichervorgang aufgebrachten Energie 31.

Fig. 3B und 3C stellen zwei mögliche Fälle der Ausspeicherung dar, wobei in beiden Fällen die Ausspeicherung nach einer langen Speicherzeit mit jeweils gleich hohen, insbesondere deutlichen Temperaturverlusten in den als Wärmespeichern ausgebildeten Wärmeaustauschvorrichtungen 6 - 9 angenommen wird.

Fig. 3B zeigt die Ausspeicherung gemäß Stand der Technik mit derselben Druckstufenzahl wie beim Einspeichern, d.h. mit einer einzigen Ausspeicher-Druckstufe. Ein Verlauf der Ausspeicherung mit Isobaren und Adiabaten 32 erfolgt von links nach rechts als Waagerechte für eine isobare Aufheizung und als fallende Asymptote für eine adiabate Expansion. Durch die verminderte Temperatur in den Wärmeaustauschvorrichtungen 6 - 9 fällt die Waagerechte im Vergleich zum Einspeichern kürzer aus. Dadurch kommt es bei der Expansion zur Unterkühlung der Expansionsvorrichtungen 13 - 16. Um eine Vereisung zu vermeiden, muss das kompressible Medium 20 spätestens kurz vor dem Punkt von dessen Unterkühlung 33 mit einem Restdruck in die Umgebung ausgelassen werden. Die Energie beim Einspeichern unter der Einspeicherkurve 34 mit einer einzigen Einspeicher-Druckstufe abzüglich der beim Ausspeichern gewonnenen Energie unter der Ausspeicherkurve 32 ist als Energieverlust 35 als schraffierte Fläche dargestellt.

Fig. 3C zeigt die Ausspeicherung für die erste Ausgestaltung gemäß Fig. 1 mit höherer Druckstufenzahl beim Ausspeichern als beim Einspeichern - hier mit beispielhaft vier Ausspeicher-Druckstufen. Ein Verlauf der Ausspeicherung mit Isobaren und Adiabaten 32* erfolgt in mehreren Schritten von links nach rechts jeweils als Waagerechte für die isobaren Aufheizungen und jeweils als fallende Asymptoten für die adiabaten Expansionen. Nach einer isobaren Aufheizung erfolgt für alle Ausspeicher-Druckstufen immer eine adiabate Expansion. Nach der letzten adiabaten Expansion wird das kompressible Medium 20 mit Umgebungsdruck in die Umgebung ausgelassen. Die Energie beim Einspeichern unter der Einspeicherkurve 34 mit einer einzigen Einspeicher-Druckstufe abzüglich der beim Ausspeichern gewonnenen Energie unter der Ausspeicherkurve 32 ist als Energieverlust 36 als schraffierte Fläche dargestellt.

Mit der Einschränkung, dass diese Darstellungen qualitativ, verlustlos und ideal sind, ist der vorteilhaft erheblich geringere Energieverlust 36 der bevorzugten vierstufigen Ausspeicherung gegenüber dem nachteilhaft hohen Verlust 35 der konventionellen, gleichstufigen Variante ersichtlich.

Fig. 4 stellt ein besonders bevorzugtes derartiges Druckstufen-Wärme-Speicherkraftwerk dar, das beispielhaft über eine solche vierstufige Kompressionsvorrichtung 2 - 5, eine solche vierstufige Expansionsvorrichtung 13 - 16, vier solche Wärmeaustauschvorrichtungen 6 - 9, vorzugsweise eine Externwärmezuleitung 37 und z.B. zwei Druckspeicher 11 verfügt. Eine Beschaltungsvorrichtung 38 ist ausgelegt, für den Einspeichervorgang bzw. den Ausspeichervorgang die Anzahl der Druckstufen zu variieren. Eine entsprechende Beschaltung kann dabei vorzugsweise nicht nur vor Beginn des Einspeichervorgangs bzw. vor Beginn des Ausspeichervorgangs, sondern auch währenddessen variiert werden. Als Einspeicher-Druckstufen können die Kompressionsvorrichtungen 2, 3, 4 und 5 beliebig mit den Wärmeaustauschvorrichtungen 6, 7, 8 und 9 kombiniert werden, wobei die Wärmeaustauschvorrichtungen 6 -9 bevorzugt gleichzeitig als regenerativer Wärmespeicher dienen. Als Ausspeicher-Druckstufen können die Wärmeaustauschvorrichtungen 6, 7, 8 und 9 beliebig mit den Expansionsvorrichtungen 13, 14, 15 und 16 kombiniert werden. Der Antrieb der Expansionsvorrichtungen 2 - 5 erfolgt über einen Motor 39. Die Expansionsvorrichtungen 13 - 16 treiben einen Generator 40 an. Das komprimierte kompressible Medium 20 wird in den Druckspeichern 11 gespeichert. Außerdem kann vorzugsweise zumindest einer der Wärmeaustauschvorrichtungen 6 -9 externe Wärme über die Externwärmezuleitung 37 zugeführt werden. Über einen Filter 1 gelangt die Umgebungsluft 20 in die erste Kompressionsvorrichtung 2. Hinter der letzten Expansionsvorrichtung 16 gelangt das kompressible Medium 20 zurück in die Umgebung 20.

Natürlich sind diverse Modifikationen der Anordnungen möglich. Bei den Ausgestaltungen sind vier Einspeicher-Druckstufen bzw. vier Ausspeicher-Druckstufen ausgebildet. Alternativ können auch Beschaltungen vorgesehen werden, bei denen ein Teil der Druckstufen gar nicht beschaltet wird oder eine geringere Anzahl an Kompressions- oder Expansionsvorrichtungen beschaltet wird. Sogar Mischformen sind denkbar, bei denen ein Tei der Kompressionsvorrichtungen oder der Expansionsvorrichtungen in Reihe geschaltet und ein anderer Teil parallel geschaltet wird.

Auch können zusätzliche Komponenten wie z.B. weitere Wärmeaustauschvorrichtungen als Wärmespeicher mit einer speziellen Isolation für hohe Temperaturen oder externe Wärmespeicher zum Zwischenspeichern von Wärmeenergie aus einem reinen Wärmetauscher ohne Regeneratoraufbau vorgesehen werden. Auch können Komponenten wie z.B. der Filter entfallen.

### Bezugszeichenliste:

- 1: Filter
- 2: erste Kompressionsvorrichtung
- 3: zweite Kompressionsvorrichtung
- 4: dritte Kompressionsvorrichtung
- 5: vierte Kompressionsvorrichtung
- 6: erste Wärmeaustauschvorrichtung
- 7: zweite Wärmeaustauschvorrichtung
- 8: dritte Wärmeaustauschvorrichtung
- 9: vierte Wärmeaustauschvorrichtung
- 10: Einlassventil des Druckspeichers
- 11: Druckspeicher
- 12: Auslassventil des Druckspeichers
- 13: erste Expansionsvorrichtung
- 14: zweite Expansionsvorrichtung
- 15: dritte Expansionsvorrichtung
- 16: vierte Expansionsvorrichtung
- 17: Generator und Motor
- 18: Kupplung zu den Kompressionsmaschinen
- 19: Kupplung zu den Expansionsmaschinen
- 20: kompressibles Medium, insbesondere Umgebungsluft
- 21: Verbindungsrohr von 13 zu 8
- 22: Verbindungsrohr von 14 zu 7
- 23: Verbindungsrohr von 15 zu 6
- 24: Verbindungsrohr von 6 zu 3
- 25: Verbindungsrohr von 7 zu 4
- 26: Verbindungsrohr von 8 zu 5
- 29: adiabate Kompression
- 30: isobare Abkühlungen
- 31: Aufgebrachte Energie beim Einspeichern
- 32: Verlauf der Ausspeicherung mit Isobaren und Adiabaten
- 32*: Verlauf der Ausspeicherung mit Isobaren und Adiabaten
- 33: Punkt der Unterkühlung des kompressiblen Mediums
- 34: Einspeicherkurve mit einer einzigen EinspeicherDruckstufe
- 35: Energieverlust im ersten Fall
- 36: Energieverlust im zweiten Fall
- 37: Externwärmezuleitung
- 38: Beschaltungsvorrichtung
- 39: Motor
- 40: Generator
- p: Druck als y-Koordinate
- V: Volumen als x-Koordinate

## Patentansprüche

1. Druckstufen-Wärme-Speicherkraftwerk zum zeitweiligen Speichern von Energie in Form von Druckenergie in einem kompressiblen Medium (20) in einem Druckspeicher (11) und in Form von Wärmeenergie mit
- zumindest einer Einspeicher-Druckstufe, aufweisend in Reihe geschaltet zumindest eine Kompressionsvorrichtung (2 - 5) und zumindest eine wärmeaustauschvorrichtung (6 - 9), und
- zumindest einer Ausspeicher-Druckstufe, aufweisend in Reihe geschaltet zumindest eine Wärmeaustauschvorrichtung (6 - 9) und zumindest eine Expansionsvorrichtung (13 - 16),
**dadurch kennzeichnet, dass**
- eine Anzahl der Einspeicher-Druckstufen ungleich ist einer Anzahl der Ausspeicher-Druckstufen.

2. Speicherkraftwerk nach Anspruch 1 mit mindestens einer solchen Wärmeaustauschvorrichtung (6), welche in mehrere als solche Wärmeaustauschvorrichtungen (6 - 9) ausgebildete Teilbereiche unterteilt ist, wobei diese Teilbereiche vom kompressiblen Medium unabhängig voneinander durchströmbar sind, wobei Temperaturgradienten innerhalb zueinander benachbart angeordneter Teilbereiche zueinander gleichgerichtet parallel verlaufen.

3. Speicherkraftwerk nach Anspruch 1 oder 2 mit einer Beschaltungsvorrichtung (38) mit Verbindungsleitungen zwischen einer oder mehreren solcher Kompressionsvorrichtungen (2 - 5)und einer oder mehreren solcher Wärmeaustauschvorrichtungen (6 - 9) und zu dem zumindest einen das kompressible Medium (20) speichernden Druckspeicher (11), wobei verschieden einstellbare Schaltzustände der Beschaltungsvorrichtung (38) die Anzahl der von dem kompressiblen Medium (20) durchströmbaren Einspeicher-Druckstufen beschalten.

4. Speicherkraftwerk nach einem der Ansprüche 1 bis 3 mit einer Beschaltungsvorrichtung (38) mit Verbindungsleitungen zwischen einer oder mehreren solcher Expansionsvorrichtungen(13 - 16)und jeweils einer oder mehreren solcher Wärmeaustauschvorrichtungen (6 - 9) und zu dem zumindest einen das kompressible Medium (20) speichernden Druckspeicher (11), wobei verschieden einstellbare Schaltzustände der Beschaltungsvorrichtung (38) die Anzahl der von dem kompressiblen Medium (20) durchströmbaren Ausspeicher-Druckstufen beschalten.

5. Speicherkraftwerk nach einem der Ansprüche 1 bis 4, wobei zumindest eine solche Wärmeaustauschvorrichtung (6 - 9) als Wärmespeicher ausgelegt ist und aus einem vom kompressiblen Medium (20) durchströmbaren Festkörper oder aus einem vom kompressiblen Medium (20) durchströmbaren Hohlraum mit Festkörperfüllung besteht.

6. Speicherkraftwerk nach einem der Ansprüche 1 bis 5, bei dem mindestens eine Externwärmezuleitung (37) an mindestens eine der Wärmeaustauschvorrichtungen (6 - 9) anschließbar ist.

7. Speicherkraftwerk nach einem der Anspruch 1 bis 6, wobei mindestens eine der Kompressionsvorrichtungen (2 - 5) auch als zumindest eine der Expansionsvorrichtungen (13 - 15) schaltbar ist.

8. Speicherkraftwerk nach einem der Ansprüche 1 bis 7, wobei zumindest ein Motor (17) an die zumindest eine Kompressionsvorrichtung (2 - 5) gekoppelt oder koppelbar ist und der Motor (17) als Generator (17) an zumindest eine der Expansionsvorrichtungen (13 - 16) gekoppelt oder koppelbar ist.

9. Energiespeicherverfahren zum zeitweiligen Speichern von Energie in Form von Druckenergie in einem kompressiblen Medium (20) und in Form von Wärmeenergie, bei dem das kompressible Medium (20) beim Einspeichern zumindest eine Einspeicher-Druckstufe, bestehend aus in Reihe geschaltet zumindest einer Kompressionsvorrichtung (2 - 5) und zumindest einer Wärmeaustauschvorrichtung (6 - 9), und beim Ausspeichern zumindest eine Ausspeicher-Druckstufe, bestehend aus in Reihe geschaltet zumindest einer Wärmeaustauschvorrichtung (6 - 9) und zumindest einer Expansionsvorrichtung (13 - 16), durchströmt, **dadurch gekennzeichnet, dass** eine Anzahl von den Einspeicher-Druckstufen ungleich einer Anzahl von den Ausspeicher-Druckstufen durchströmt wird.

10. Speicherverfahren nach Anspruch 9, bei dem mindestens eine solche Wärmeaustauschvorrichtung (6) in mehrere als solche Wärmeaustauschvorrichtungen (6 - 9) ausgebildete Teilbereiche unterteilt ist, wobei diese Teilbereiche vom kompressiblen Medium unabhängig voneinander durchströmt werden, wobei Temperaturgradienten innerhalb zueinander benachbart angeordneter Teilbereiche zueinander gleichgerichtet parallel verlaufen.

11. Speicherverfahren nach Anspruch 9 oder 10, bei dem die Anzahl der von dem kompressiblen Medium (20) durchströmbaren Einspeicher-Druckstufen wahlweise beschaltet wird durch wahlweises Beschalten von Verbindungsleitungen zwischen einer oder mehreren solcher Kompressionsvorrichtungen (2 - 5) und einer oder mehreren solcher Wärmeaustauschvorrichtungen (6 - 9).

12. Speicherverfahren nach einem der Ansprüche 9 bis 11, bei dem die Anzahl der von dem kompressiblen Medium (20) durchströmbaren Ausspeicher-Druckstufen wahlweise beschaltet wird durch wahlweises Beschalten von Verbindungsleitungen zwischen einer oder mehreren solcher Expansionsvorrichtungen (13 - 16) und einer oder mehreren solcher Wärmeaustauschvorrichtungen (6 - 9).

13. Speicherverfahren nach einem der Ansprüche 9 bis 12, wobei das kompressible Medium (20) durch zumindest eine solche wärmeaustauschvorrichtung (6 - 9) geleitet wird, welche als Wärmespeicher ausgelegt ist und aus einem vom kompressiblen Medium durchströmbaren Festkörper oder aus einem vom kompressiblen Medium durchströmbaren Hohlraum mit Festkörperfüllung besteht.

14. Speicherverfahren nach einem der Ansprüche 9 bis 13, bei dem durch mindestens eine Externwärmezuleitung (37) zusätzlich externe Wärmeenergie in mindestens eine der Wärmeaustauschvorrichtungen (6 - 9) zugeführt wird.

15. Speicherverfahren nach einem der Ansprüche 9 bis 14, wobei zumindest eine der Kompressionsvorrichtungen (2 - 5) zum Ausspeichern alternativ als Expansionsvorrichtung beschaltet wird.

16. Speicherverfahren nach einem der Ansprüche 9 bis 15, wobei zumindest ein Motor (17) wahlweise die zumindest eine Kompressionsvorrichtung (2 - 5) antreibt oder der Motor (17) als Generator (17) von zumindest einer der Expansionsvorrichtungen (13 - 16) angetrieben wird.
